# EUROPÄISCHE PATENTSCHRIFT

(11) **EP 2 176 596 B1**
(45) Veröffentlichungstag und Bekanntmachung des Hinweises auf die Patenterteilung: **12.09.2012**
(21) Anmeldenummer: 08801067.3
(22) Anmeldetag: 23.07.2008
(51) Int. Cl.: F24C 7/00, H04L 29/08

(54) **SYSTEM AUS EINER VIELZAHL VON GARGERÄTEN JEWEILS MIT NETZWERKBASIERTER KONTROLLEINRICHTUNG**
SYSTEM CONSISTING OF A PLURALITY OF COOKING DEVICES WITH RESPECTIVE NETWORK-BASED MONITORING DEVICES
SYSTÈME CONSTITUÉ D'UNE PLURALITÉ D'APPAREILS DE CUISSON COMPRENANT RESPECTIVEMENT UN DISPOSITIF DE CONTRÔLE À BASE RÉSEAU

(30) Priorität: 01.08.2007 DE 102007036511
(43) Veröffentlichungstag der Anmeldung: 21.04.2010
(73) Patentinhaber: Rational AG, 86899 Landsberg/Lech (DE)
(72) Erfinder: DIETMAYER, Cornelia, 86947 Weil (DE); STEINHOFER, Ingrid, 80333 München (DE); SCHÜHLER, Bernard, 86845 Grossaitingen (DE); DOBOS, Laszlo, 85253 Erdweg/Hof (DE); SCHULLER, Erwin, 82515 Wolfratshausen (DE); GOVORUKHIN, Alexey, 86899 Landsberg (DE); MÄRZ, Wilhelm, 86833 Siebnach (DE); PECHAIGNER, Stefan, 58221 Dachau (DE)
(74) Vertreter: Weber-Bruls, Dorothée
(86) Internationale Anmeldenummer: PCT/DE2008/001228
(87) Internationale Veröffentlichungsnummer: WO 2009/015646

(56) Entgegenhaltungen:
- EP-A- 1 191 507
- EP-A- 1 345 190
- EP-A- 1 698 831
- DE-A1- 10 201 217
- DE-A1- 10 260 143

## Beschreibung

Die Erfindung betrifft ein System aus einer Vielzahl von Gargeräten, jeweils mit einer netzwerkbasierten Kontrolleinrichtung.

Im Stand der Technik sind verschiedene Gargeräte bekannt, die jeweils über eine Netzwerkverbindung mit einem Server oder einer Recheneinheit kommunizieren.

So ist beispielsweise in der WO 97/41392 A2 ein Netzwerk zur Überwachung und Wartung einer großen Anzahl von räumlich verteilt aufgestellten Gargeräten beschrieben, das von einer zentralen Kontrolleinheit gesteuert wird. Die Kommunikation zwischen der zentralen Kontrolleinheit und den Gargeräten findet über zwischengeschaltete Basisstationen statt, die in der Nähe der Gargeräte aufgestellt sind.

Ferner ist aus der nicht vorveröffentlichten DE 10 2006 062 244 ein Verfahren zur Fernanalyse eines Gargeräts sowie ein Gargerät zum Durchführen eines solchen Verfahrens bekannt. Das dort offenbarte Gargerät weist einen Speicher auf und ist über eine Schnittstelle mit einem Server verbindbar. Zur Fernanalyse kann der Server Daten des Gargeräts aus dem Speicher auslesen.

In der DE 102 01 217 A1 sind ein Gargerät und ein Verfahren zur Datensicherung von Steuerungs- oder Messdaten eines Gargerätes offenbart, wobei das Gargerät über eine Internetverbindung auf einen Webserver zugreift. Nachdem gegebenenfalls eine Authentifizierung des Gargerätes gegenüber dem Webserver erfolgt ist, können die Steuerungs- oder Messdaten in einem geschützten Speicherbereich des Webservers gesichert werden.

Nachteilig am Stand der Technik ist, dass eine netzwerkbasierte Kommunikation mit dem Gargerät nur von einem bestimmten zentralen Server oder einer vergleichbaren Recheneinheit erfolgen kann. Die möglichen Zugriffspunkte innerhalb des Netzwerks auf das Gargerät sind somit limitiert.

Beispielsweise aus der DE 102 11 064 A1 ist ein tragbares Informationsgerät zum Liefern von Informationen über eine Mehrzahl von unterschiedlichen elektronischen Hausgeräten zu einem Benutzer des tragbaren Informationsgerätes bekannt, wobei besagtes Informationsgerät eine Einrichtung zum Ermitteln eines der Geräte, das sich in einem Interaktionsbereichs eines Benutzers befindet, eine Einrichtung zum Erhalten von Informationen über das ermittelte Gerät und eine Einrichtung zum Darstellen der erhaltenen Informationen dem Benutzer gegenüber umfasst. Dadurch soll es möglich werden, dass einem Benutzer für jedes elektronische Hausgerät alle Informationen schnell und übersichtlich angezeigt werden, wobei immer nur die Informationen des Haushaltsgeräts angezeigt werden, mit dem der Benutzer auch interagieren möchte. Dabei kommt ein Informationsserver zum Einsatz.

Die US 2007/0086514 A1 offenbart eine Einrichtung, mit der ein elektronisches Gerät mit Strom versorgt werden kann und zudem ein Kommunikationszugang zu dem Gerät ermöglicht wird, wobei die Vorrichtung einen Webserver enthalten kann.

Ferner offenbart die DE 102 60 143 A1 die Übertragung von Daten in einem lokalem Hausgeräte-Netzwerk, wobei das lokale Hausgeräte-Netzwerk zumindest ein netzwerkfähiges Hausgerät und zumindest ein Gateway zu zumindest einem weiteren Netzwerk umfasst.

Die EP 1 477 908 A1 offenbart ein Kommunikationssystem mit mindestens einem elektrischem Gerät und einem Server, wobei das Gerät mit dem Server vernetzt ist, auf dem Server relevante Daten des Geräts abgebildet sind sowie der Server mittels Internet mit einem Call-Center verbindbar ist. Auf Anforderung besitzt das Call-Center Zugang zum Server bzw. dem Gerät, so dass durch externe Aktivitäten des Centers ein gewünschter Zustand des Geräts herbeigeführt werden kann.

Aus der EP 1 698 831 A2 ist ein Verfahren zur Konfigurierung/Aktualisierung von unvernetzten gewerblichen Gargeräten eines Gargeräte-Systems bekannt, bei dem Steuerungs- und Kochsoßware in einer Entwicklungszentrale zentral entwickelt und sodann auf einem transportablen elektrischen Speichermedium in Form einer SD- oder MMC-Karte abgespeichert werden, um mittels besagter Karte an ein zu konfigurierendes/aktualisierendes Satelliten-Gargerät versandt zu werden, in dem dann die dort gespeicherte Software gelöscht und die neue Software von besagter Karte ausgelesen wird.

Der vorliegenden Erfindung liegt daher die Aufgabe zugrunde, ein System aus einer Vielzahl von Gargeräten bereitzustellen, das es ermöglicht, dass von möglichst vielen Punkten eines Netzwerks eine Kontrolle zumindest eines dieser Gargeräte erfolgen kann.

Diese Aufgabe wird gelöst durch ein System aus einer Vielzahl von Gargeräten, die über Schnittstellen miteinander verbindbar sind, wobei jedes Gargerät mit zumindest einem internen Webserver, der an ein Netzwerk angeschlossen ist und in dem Netzwerk Dienste zur Kontrolle, Steuerung und/oder Analyse zumindest eines der Gargerätes bereitstellt, und mit zumindest einem internen Webbrowser, der an das Netzwerk angeschlossen ist und zumindest die Dienste eines der internen Webserver in Anspruch nehmen kann, ausgerüstet ist, so dass ein Garprozeß aller Gargeräte synchron über den internen Webbrowser eines der Gargeräte kontrolliert ist.

Ferner kann vorgesehen sein, dass jeder interne Webserver ein Server ist, dessen Dienste über das HTTP-Protokoll abrufbar sind.

Auch wird erfindungsgemäß vorgeschlagen, dass jeder interne Webbrowser ein Client ist, der über das HTTP-Protokoll auf das Netzwerk zugreift, wobei die Dienste vorzugsweise Webdienste sind.

Mit der Erfindung wird ferner vorgeschlagen, dass die Dienste jedes internen Webservers von zumindest einem entfernten, an das Netzwerk angeschlossenen Webbrowser abrufbar sind.

Erfindungsgemäß kann auch vorgesehen sein, dass jeder interne Webbrowser die Dienste von zumindest einem entfernten, an das Netzwerk angeschlossenen Webserver in Anspruch nimmt.

Auch wird vorgeschlagen, dass zumindest die Dienste des internen Webservers eine Gerätesteuerung sowie ein Auslesen, ein Schreiben und/oder eine Modifikation von Einstellungen und Gargerätekonfigurationen, ein Auslesen und/oder ein Ändern von Laufzeiten und Laufzyklen von Garprozessen, ein Auslesen von Service-, Diagnose- und Statistikdaten sowie ein Erstellen, eine Verwaltung, ein Hoch- und/oder ein Herunterladen von Garprogrammen umfassen.

Ebenfalls kann vorgesehen sein, dass jeder interne Webbrowser durch die Inanspruchnahme der Dienste jedes internen Webservers aktiver Bestandteil der Gerätebedienung des jeweiligen Gargerätes ist.

Bevorzugt ist erfindungsgemäß, dass der interne Webserver bidirektional über eine Datenleitung mit einer elektronischen Steuervorrichtung des jeweiligen Gargerätes verbunden ist.

Des weiteren kann vorgesehen sein, dass das Netzwerk ein lokales Netzwerk jedes Gargerätes umfasst, wobei die lokalen Netzwerke über jeweils eine Schnittstelle miteinander oder einem weiteren Gargerät verbindbar sind.

dassNach der Erfindung kann vorgesehen sein, dass das Netzwerk das Internet umfaßt, wobei insbesondere das lokale Netzwerk über eine Schnittstelle mit dem Internet verbindbar ist.

Mit der Erfindung wird auch vorgeschlagen, dass die Schnittstelle eine Webschnittstelle ist.

Ein erfindungsgemäßes System kann auch dadurch gekennzeichnet sein, dass Dienste für ein Gargerät von einem zentralen Webserver oder einem internen Webserver eines anderen Gargerätes vom internen Webbrowser des einem Gargeräts in Anspruch nehmbar sind.

Der Erfindung liegt also die überraschende Erkenntnis zugrunde, dass durch die Integration eines Webservers in jedes Gargerät einer Vielzahl von Gargeräten eine Kontrolle, Steuerung und/oder Analyse jedes dieser Gargeräte von einem beliebigen, entfernten Ort mittels eines herkömmlichen an das Internet angeschlossenen Webbrowsers erfolgen kann. Dies ermöglicht ein besonders hohes Maß an Flexibilität beim Netzwerk-Zugriff auf jedes Gargerät, da der Ort des Zugriffs nicht mehr auf den Aufstellungsort eines entfernten Webservers beschränkt ist. Durch die zusätzliche Integration eines Webbrowsers in jedes Gargerät wird erreicht, dass die Benutzerschnittstelle an jedem Gargerät mit der Benutzerschnittstelle eines entfernten Webbrowsers vereinheitlich wird. Zudem kann jeder gargeräteinterne Webbrowser auf weitere Gargeräte und weitere entfernte Webserver zugreifen, was eine flexible Nutzung von örtlich verteilten Netzwerk-Ressourcen ermöglicht.

Weitere Merkmale und Vorteile der Erfindung ergeben sich aus der nachstehenden Beschreibung, in der ein erfindungsgemäßes Gargerät anhand schematischer Zeichnungen beispielhaft erläutert wird. Dabei zeigt:
- Figur 1: eine schematische Darstellung der Netzwerk-Komponenten und Netzwerk-Verbindungen eines n Gargerätes,eines erfindungsgemäßen Systems aus einer Vielzahl von Gargeräten;
- Figur 2: eine Vorderansicht einer Anordnung von drei in einem erfindungsgemäßem System miteinander vernetzten, Gargeräten; und
- Figur 3: eine Vorderansicht einer alternativen Anordnung von drei in einem erfindungsgemäßem System miteinander vernetzten, erfindungsgemäßen Gargeräten.

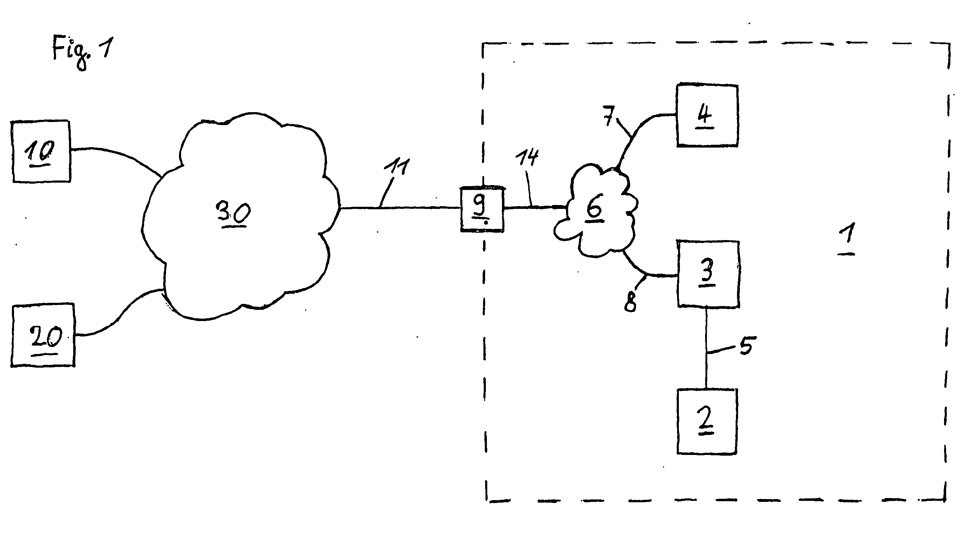

In Fig. 1 ist schematisch der Aufbau der Netzwerk-Komponenten und Netzwerk-Verbindungen eines Gargerätes 1 dargestellt. Der gestrichelte Kasten markiert den Bereich des Gargerätes 1. Eine gargeräteinterne elektronische Steuervorrichtung 2 steht über eine bidirektionale Datenverbindung 5 mit einem gargeräteinternen Webserver 3 in Verbindung. Mittels dieser Datenverbindung 5 wird dem Webserver 3 ermöglicht, Daten und Befehle zur Kontrolle, Steuerung und zur Analyse eines Garprozesses in einem nicht gezeigten Garraum des Gargerätes 1 mit der Steuervorrichtung 2 auszutauschen. Der Webserver 3 ist über eine Netzwerkverbindung 8 an ein lokales Netzwerk 6 angeschlossen und stellt in diesem Netzwerk 6 Dienste bzw. Webdienste bereit. Diese Dienste umfassen typischerweise eine Gerätesteuerung sowie ein Auslesen, ein Schreiben und/oder eine Modifikation von Einstellungen und Gargerätekonfigurationen, ein Auslesen und/oder ein Ändern von Laufzeiten und Laufzyklen von Garprozessen, ein Auslesen von Service-, Diagnose- und Statistikdaten sowie ein Erstellen, eine Verwaltung, ein Hoch- und/oder ein Herunterladen von Garprogrammen.

Ein gargeräteinterner Webbrowser 4 ist über eine Netzwerk-Verbindung 7 ebenfalls mit dem Netzwerk verbunden und kann auf den Webserver 3 zugreifen bzw. dessen Dienste in Anspruch nehmen. Der Webbrowser 4 steht mit einer nicht gezeigten Anzeige- und Bedieneinrichtung des Gargerätes 1 in Verbindung.

Die Begriffe "interner Webserver" und "interner Webbrowser" bezeichnen jeweils ein Programm, welches auf einer oder mehreren gargeräteinternen Recheneinheiten läuft.

So kann beispielsweise diese Server-Client-Kombination auf einer Recheneinheit oder auf zwei getrennten Recheneinheiten laufen. Ebenso ist eine Kombination möglich, bei der die Steuervorrichtung 2, der interne Webserver 3 und der interne Webbrowser 4 auf einer gargeräteinternen Recheneinheit integriert sind.

Die Kommunikation zwischen dem Webserver 3 und dem Webbrowser 4 innerhalb des Netzwerks erfolgt typischerweise über das HTTP-Protokoll (Hypertext Transfer Protokoll). Ebenfalls denkbar ist die Verwendung eines anderen Protokolls, wobei die Begriffe Werbserver und Webbrowser in diesem allgemeineren Fall mit den Begriffen Server und Client zu ersetzen wären.

Das Netzwerk umfaßt also das gargeräteinteme, lokale Netzwerk 6, welches über Netzwerkverbindungen 7, 8 und 14 mit dem Webserver 3, dem Webbrowser 4 und einer Schnittstelle 9, insbesondere einem Router oder einer Webschnittstelle, verbunden ist. Die Schnittstelle 9 ist über eine Netzwerk-Verbindung 11 an das Internet 30 anschließbar. Dies ermöglicht, dass die Dienste des internen Webservers 4 von einem oder mehreren beliebigen, an das Internet 30 angeschlossenen, entfernten Webbrowsern 20 in Anspruch genommen werden können. Somit ist von einem beliebigen Internetzugang ein Zugriff auf das Gargerät 1 über einen Standard-Webbrowser 20 möglich.

Um einen nicht-authorisierten Zugriff auf das Gargerät 1 zu verhindern, kann der interne Webserver 3 eine Authentifizierung eines entfernten Benutzers oder Webbrowsers 20 fordern. Zur weiteren Erhöhung der Verbindungssicherheit kann zwischen dem internen Webserver 3 und einem entfernten Webbrowser 20 eine verschlüsselte Verbindung, beispielsweise mittels SSL- (Secure Sockets Layer) oder vergleichbaren Protokollen, erfolgen.

Mit einem frei erhältlichen Standard-Webbrowser 20 ist somit an einem entfernten Ort ein sehr einfacher Zugriff auf das Gargerät 1 unabhängig vom verwendeten Betriebssystem oder von der Hardware-Plattform möglich. Zudem entfällt die Notwendigkeit der Verwendung von kostenintensiver proprietärer Software zur externen Steuerung des Gargerätes 1 bei Verwendung von nicht standardisierten, kunden- oder gerätespezifischen Kommunikationslösungen.

Ein weiterer Vorteil des Gargerätes 1 ist, dass die Benutzerschnittstelle des entfernten Webbrowsers 20 die gleiche ist wie beim internen Webbrowser 4. Die Bedienung am Gargerät 1 hat also das gleiche "Look and Feel" wie die Bedienung am entfernten Webbrowser 20. Ebenfalls ist vorgesehen, dass Zustandsänderungen des Gargerätes 1 durch einen Zugriff über einen internen oder entfernten Webbrowsers synchron bei allen anderen mit dem Webserver 3 verbundenen Webbrowsem angezeigt werden. Somit besteht keine Gefahr eines Auseinanderlaufens der Webbrowser und eine Nachpflege entfällt, da die Anzeige auf dem externen Webbrowser 20 und dem internen Webbrowser 3 synchronisiert ist.

In umgekehrter Weise kann der interne Webbrowser 4 auf weitere entfernte Webserver 10 zugreifen und deren Dienste in Anspruch nehmen. So kann der Benutzer des Gargerätes 1 zum Beispiel auf einfache Weise Garprogramme von einem entfernten Webserver 10 oder einem anderen Gargerät herunterladen.

Das lokale Netzwerk 6 des Gargerätes 1 kann sowohl mit dem Internet 30 als auch mit weiteren lokalen Netzwerken oder weiteren Gargeräten, mit oder ohne Zwischenschaltung des Internet 30, verbunden werden. So ermöglicht eine Zusammenschaltung von mehreren Gargeräten zu einem erfindungsgemäßem System neue Möglichkeiten der Gargerätesteuerung, insbesondere wenn mehrere Gargeräte nebeneinander stehen, wie es beispielsweise in professionellen Großküchen üblich ist.

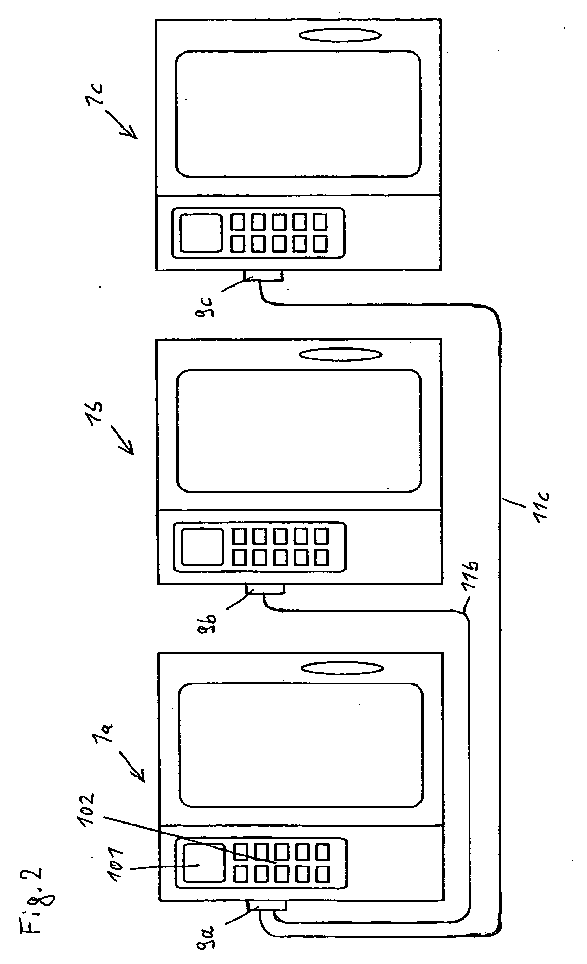

Eine solche beispielhafte Anordnung von drei in einem erfindungsgemäßem System nebeneinander stehenden Gargeräten 1a bis 1c ist in Fig. 2 skizziert. Die Schnittstellen 9b und 9c der Gargeräte 1b und 1c sind jeweils über Netzwerk-Verbindungen 11b und 11c mit der Schnittstelle 9a von Gargerät 1a verbunden. So wird ein Netzwerk gebildet, welches die lokalen Netzwerke 6 der drei Gargeräte umfaßt.

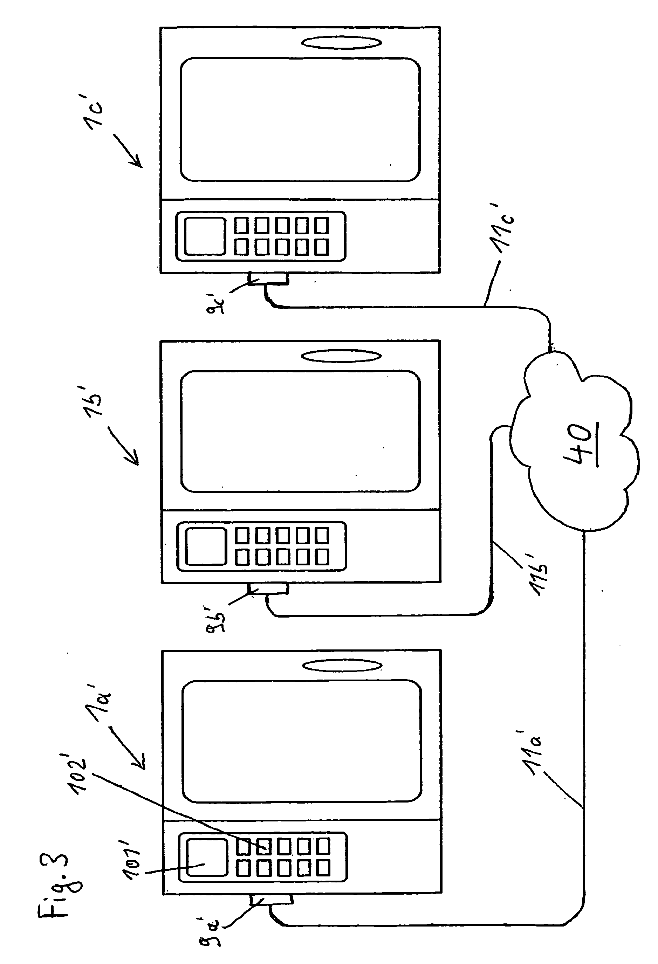

Fig. 3 zeigt eine ähnliche Anordnung von drei in einem weiterem erfindungsgemäßem System miteinander verbundenen Gargeräten 1a' bis 1c' mit einer im Vergleich zu Fig. 2 alternativen Netzwerkkonfiguration. Die Schnittstellen 9a' bis 9c' der drei Gargeräte 1a' bis 1c' stehen hier über Netzwerk-Verbindungen 11 a' bis 11 c' mit einem Netzwerk 40, insbesondere dem Internet, in Verbindung.

In den in Fig. 2 und Fig. 3 dargestellten Konfigurationen kann also der Webbrowser eines Gargerätes 1a, 1a' die Dienste der drei internen Webserver der Gargeräte 1a bis 1c, 1a' bis 1c' in Anspruch nehmen. Ein Benutzer kann über die mit dem internen Webbrowser eines Gargerätes 1a, 1a' in Verbindung stehende Bedieneinrichtung 102, 102' und Anzeigeeinrichtung 101, 101' alle drei Gargeräte 1a bis 1c, 1a' bis 1c' gleichzeitig kontrollieren.

Wenn eine größere Menge an Gargut auf gleiche Art und Weise gegart werden soll, beispielsweise beim Aufwärmen oder Finishing von Bankett-Gerichten, ist die Zusammenschaltung von mehreren Gargeräten zu einem erfindungsgemäßem System besonders hilfreich. In Bezug zu dem in Fig. 2 und Fig. 3 dargestellten Fall können also die drei Gargeräte 1a bis 1c, 1a' bis 1c' zunächst separat mit Gargut beschickt werden. Daraufhin kann der Garprozeß aller drei Gargeräte synchron über den internen Webbrowser eines Gargerätes 1a, 1a' kontrolliert werden. Somit entfällt die Programmierung und/oder Bedienung der einzelnen Gargeräte, was zu Zeit- und Kostenersparnis führt. Die drei Gargeräte lassen sich also optional zu einem einzigen großen virtuellen Gargerät zusammenschalten. Hierdurch kann eine sehr flexible Anpassung der Gargeräte-Kapazitäten an den aktuellen Bedarf im professionellen Küchenbetrieb erfolgen.

Die vorstehend genannten Netzwerk-Verbindungen können in verschiedenen Varianten oder Kombinationen aus diesen Varianten verwirklicht sein. Beispielsweise kommen neben einer elektrischen Kabelverbindung noch optische Netzwerkverbindungen oder drahtlose Verbindungen, basierend auf der Bluetooth- oder Wireless-LAN-Technik, in Betracht.

Die in der voranstehenden Beschreibung, in den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1, 1a - 1c, 1a' - 1c': Gargerät
- 2: Elektronische Steuervorrichtung
- 3: Interner Webserver
- 4 .: Interner Webbrowser
- 5: Bidirektionale Datenverbindung
- 6: lokales Netzwerk
- 7: Netzwerk-Verbindung
- 8: Netzwerk-Verbindung
- 9, 9a - 9c, 9a' - 9c': Schnittstelle
- 10: Entfernter Webserver
- 11, 11b, 11c, 11a' - 11 c': Netzwerk-Verbindung
- 12: Netzwerk-Verbindung
- 13: Netzwerk-Verbindung
- 14: Netzwerk-Verbindung
- 20: Entfernter Webbrowser
- 30: Internet
- 40: Netzwerk
- 101, 101': Anzeigeeinrichtung
- 102, 102': Bedieneinrichtung

## Patentansprüche

1. System aus einer Vielzahl von Gargeräten (1, 1a - 1c, 1a' - 1c'), die über Schnittstellen (9a - 9c, 9a' - 9c') miteinander verbindbar sind, **dadurch gekennzeichnet, dass**
jedes Gargerät (1, 1a- 1c, 1a' - 1c') mit zumindest einem internen Webserver (3), der an ein Netzwerk (6, 30, 40) angeschlossen ist und in dem Netzwerk (6, 30, 40) Dienste zur Kontrolle, Steuerung und/oder Analyse zumindest eines der Gargeräte (1, 1a- 1c, 1a' - 1c') bereitstellt, mit zumindest einem internen Webbrowser (4), der an das Netzwerk (6, 30, 40) angeschlossen ist und zumindest die Dienste eines der internen Webserver (3) in Anspruch nehmen kann und mit zumindest einer Bedieneinrichtung (102, 102') ausgerüstet ist, so dass ein Garprozess aller Gargeräte (1, 1a - 1c, 1a' - 1c') synchron über den internen Webbrowser (4) eines ersten Gargerätes (1a, 1a') kontrollierbar ist, indem durch den internen Webbrowser (4) des ersten Gargerätes (1a, 1a') die Dienste der internen Webserver (3) der anderen Gargeräte (1b - 1c, 1b' - 1c') zur gleichzeitigen Kontrolle der Bedieneinrichtung (102, 102') der anderen Gargeräte in Anspruch nehmbar sind.

2. System nach Anspruch 1, **dadurch gekennzeichnet, dass**
jeder interne Webserver (3) ein Server ist, dessen Dienste über das HTTP-Protokoll abrufbar sind.

3. System nach Anspruch 1 oder 2, **dadurch gekennzeichnet, dass**
jeder interne Webbrowser (4) ein Client ist, der über das HTTP-Protokoll auf das Netzwerk zugreift, wobei die Dienste vorzugsweise Webdienste sind.

4. System nach einem der vorangehenden Ansprüche, **dadurch gekennzeichnet, dass**
die Dienste jedes internen Webservers (3) von zumindest einem entfernten, an das Netzwerk (6, 30, 40) angeschlossenen Webbrowser (20) abrufbar sind.

5. System nach einem der vorangehenden Ansprüche, **dadurch gekennzeichnet, dass** jeder interne Webbrowser (4) die Dienste von zumindest einem entfernten, an das Netzwerk (6,30,40) angeschlossenen Webserver (10) in Anspruch nimmt.

6. System nach einem der vorangehenden Ansprüche, **dadurch gekennzeichnet, dass**
zumindest die Dienste eines internen Webservers (3) eine Gerätesteuerung sowie ein Auslesen, ein Schreiben und/oder eine Modifikation von Einstellungen und GargeräteKonfigurationen, ein Auslesen und/oder ein Ändern von Laufzeiten und Laufzyklen von Garprozessen, ein Auslesen von Service-, Diagnose- und Statistikdaten sowie ein Erstellen, eine Verwaltung, ein Hoch- und/oder ein Herunterladen von Garprogrammen umfassen.

7. System nach Anspruch 6, **dadurch gekennzeichnet, dass** jeder interne Webbrowser (4) durch die Inanspruchnahme der Dienste jedes internen Webservers (3) aktiver Bestandteil der Gerätebedienung des jeweiligen Gargerätes (1, 1 a - 1 c, 1a' - 1c') ist.

8. System nach einem der vorangehenden Ansprüche, **dadurch gekennzeichnet, dass** jeder interne Webserver (3) bidirektional über eine Datenleitung (5) mit einer elektronischen Steuervorrichtung (2) des jeweiligen Gargerätes (1, 1a - 1c, 1a' - 1c') verbunden ist.

9. System nach einem der vorangehenden Ansprüche, **dadurch gekennzeichnet, dass** das Netzwerk (6, 30, 40) ein lokales Netzwerk (6) jedes Gargerätes (1, 1a - 1c, 1a' - 1c') umfasst, wobei die lokalen Netzwerke (6) über jeweils eine Schnittstelle (9, 9a - 9c, 9a' - 9c') miteinander oder einem weiteren Gargerät (1a - 1c, 1a' - 1c') verbindbar sind.

10. System nach einem der vorangehenden Ansprüche, **dadurch gekennzeichnet, dass** das Netzwerk (6, 30, 40) das Internet umfasst, wobei insbesondere jedes lokale Netzwerk (6) über eine Schnittstelle (9) mit dem Internet (30) verbindbar ist

11. System nach Anspruch 9 oder 10, **dadurch gekennzeichnet, dass**
die Schnittstelle (9, 9a - 9c, 9a' - 9c') eine Webschnittstelle ist.

12. System nach einem der vorangehenden Ansprüche, **dadurch gekennzeichnet, dass**
Dienste für ein Gargerät (1a - 1c, 1a' - 1c') von einem zentralen Webserver oder einem internen Webserver eines anderen Gargerätes (1a - 1c, 1a' - 1c') vom internen Webbrowser (4) des einen Gargeräts (1a - 1c, 1a' - 1c') in Anspruch nehmbar sind.

## Claims

1. A system comprising a plurality of cooking devices (1, 1a - 1c, 1a' - 1c') that can be interconnected via interfaces (9a - 9c, 9a' - 9c'), **characterized in that**
each cooking device (1, 1a - 1c, 1a' - 1c') is equipped with at least one internal web server (3), which is connected to a network (6, 30, 40) and provides monitoring, controlling and/or analysis services relating to at least one of the cooking devices (1, 1a - 1c, 1a' - 1c') in the network (6, 30, 40), with at least one internal web browser (4), which is connected to the network (6, 30, 40) and can use the services of at least one of the internal web servers (3), and with at least one operating device (102, 102'), so that a cooking process of all cooking devices (1, 1a - 1c, 1a' - 1c') can be monitored synchronously via the internal web browser (4) of a first cooking device (1a, 1a'), wherein the internal web browser (4) of the first cooking device (1a, 1a') can use the services of the internal web servers (3) of the other cooking devices (1b - 1c, 1b' - 1c') for the simultaneous monitoring of the operating device (102, 102') of the other cooking devices.

2. A system according to claim 1, **characterized in that**
each internal web server (3) is a server, the services of which can be retrieved via the HTTP protocol.

3. A system according to either of claims 1 or 2, **characterized in that**
each internal web browser (4) is a client that accesses the network via the HTTP protocol, wherein the services are preferably web services.

4. A system according to any one of the preceding claims, **characterized in that**
the services of each internal web server (3) can be retrieved by at least one remote web browser (20) that is connected to the network (6, 30, 40).

5. A system according to any one of the preceding claims, **characterized in that**
each internal web browser(4) uses the services of at least one remote web server (10) that is connected to the network (6, 30, 40).

6. A system according to any one of the preceding claims, **characterized in that**
at least the services of one internal web server (3) comprise a device control, together with reading, writing and/or modifying settings and cooking device configurations, reading and/or altering run times and run cycles of cooking processes, reading service, diagnostics and statistics data and setting, managing, uploading or downloading cooking programs.

7. A system according to claim 6, **characterized in that** each internal web browser (4) is an active component of the device operation of the respective cooking device (1, 1a - 1c, 1a' - 1c') due to the use of the services of each internal web server (3).

8. A system according to any one of the preceding claims, **characterized in that** each
internal web server (3) is connected bi-directionally to an electronic control device (2) of the respective cooking device (1, 1a - 1c, 1a' - 1c') via a data line (5).

9. A system according to any one of the preceding claims, **characterized in that** the network (6, 30, 40) comprises a local network (6) of each cooking device (1, 1a - 1c, 1a' - 1c'), wherein the local networks (6) can be connected to each other or to a further cooking device (1, 1a - 1c, 1a' - 1c') via one interface (9, 9a - 9c, 9a' - 9c') respectively.

10. A system according to any one of the preceding claims, **characterized in that** the network (6, 30, 40) comprises the internet, wherein in particular each local network (6) can be connected to the internet (30) via an interface (9).

11. A system according to either of claims 9 or 10, **characterized in that**
the interface (9, 9a - 9c, 9a' - 9c') is a web interface.

12. A system according to any one of the preceding claims, **characterized in that** services for a cooking device (1, 1a - 1c, 1a' - 1c') that are available from a central web server or an internal web server of another cooking device (1, 1a - 1c, 1a' - 1c') can be used by the internal web browser (4) of the one cooking device (1, 1a - 1c, 1a' - 1c').

## Revendications

1. Système constitué d'une pluralité d'appareils de cuisson (1, 1a - 1c, 1a' - 1c'), qui peuvent être reliés les uns aux autres par des interfaces (9a - 9c, 9a' - 9c'), **caractérisé en ce que** chaque appareil de cuisson (1, 1a - 1c, 1a' - 1c') est équipé d'au moins un serveur web (3) interne, qui est raccordé à un réseau (6, 30, 40) et met à disposition dans le réseau (6, 30, 40) des services pour le contrôle, la commande et/ou l'analyse d'au moins l'un des appareils de cuisson (1, 1a - 1c, 1a' - 1c'), d'au moins un navigateur web (4) interne, qui est raccordé au réseau (6, 30, 40) et peut avoir recours au moins aux services de l'un des serveurs web (3) internes et est équipé d'au moins un dispositif de commande (102, 102'), de sorte qu'un processus de cuisson de tous les appareils de cuisson (1, 1a - 1c, 1a' - 1c') peut être contrôlé de façon synchrone par le navigateur web (4) interne d'un premier appareil de cuisson (1a, 1a'), du fait que les services des serveurs web (3) internes des autres appareils de cuisson (1b - 1c, 1b' - 1c') peuvent être utilisés par le navigateur web (4) interne du premier appareil de cuisson (1a, 1a') pour le contrôle simultané du dispositif de commande (102, 102') des autres appareils de cuisson.

2. Système selon la revendication 1, **caractérisé en ce que** chaque serveur web (3) interne est un serveur dont les services peuvent être appelés par le protocole HTTP.

3. Système selon la revendication 1 ou 2, **caractérisé en ce que** chaque navigateur web (4) interne est un client qui a recours par le protocole HTTP au réseau, les services étant de préférence des services web.

4. Système selon l'une des revendications précédentes, **caractérisé en ce que** les services de chaque serveur web (3) interne peuvent être appelés par au moins un navigateur web (20) éloigné et raccordé au réseau (6, 30, 40).

5. Système selon l'une des revendications précédentes, **caractérisé en ce que** chaque navigateur web (4) interne a recours aux services d'au moins un serveur web (10) éloigné et raccordé au réseau (6, 30, 40).

6. Système selon l'une des revendications précédentes, **caractérisé en ce qu'**au moins les services d'un serveur web (3) interne comprennent une commande d'appareil et une lecture, un enregistrement et/ou une modification de réglages et des configurations d'appareils de cuisson, une lecture et/ou une modification de temps de fonctionnement et de cycles de fonctionnement de processus de cuisson, une lecture de données de service, de diagnostic et de statistique ainsi qu'une élaboration, une gestion, un chargement et un téléchargement de programmes de cuisson.

7. Système selon la revendication 6, **caractérisé en ce que** chaque navigateur web (4) interne est un composant actif de la commande de l'appareil de cuisson respectif (1, 1a - 1c, 1a'- 1c') du fait de la mise à contribution des services de chaque serveur web (3) interne.

8. Système selon l'une des revendications précédentes, **caractérisé en ce que** chaque serveur web (3) interne est relié de façon bidirectionnelle par une ligne de données (5) à un dispositif de commande (2) électronique de l'appareil de cuisson (1, 1a - 1c, 1a' - 1c') respectif.

9. Système selon l'une des revendications précédentes, **caractérisé en ce que** le réseau (6, 30, 40) comprend un réseau local (6) de chaque appareil de cuisson (1, 1a - 1c, 1a'-1c'), les réseaux (6) locaux pouvant être reliés par respectivement une interface (9, 9a - 9c, 9a' - 9c') les uns avec les autres ou avec un autre appareil de cuisson (1a - 1 c, 1a'-1c').

10. Système selon l'une des revendications précédentes, **caractérisé en ce que** le réseau (6, 30, 40) comprend l'Internet, sachant qu'en particulier chaque réseau (6) local peut être relié par une interface (9) à l'Internet (30).

11. Système selon la revendication 9 ou 10, **caractérisé en ce que** l'interface (9, 9a - 9c, 9a' - 9c') est une interface web.

12. Système selon l'une des revendications précédentes, **caractérisé en ce que** des services peuvent être mis à contribution pour un appareil de cuisson (1 a - 1 c, 1 a'- 1 c') par un serveur web central ou un serveur web interne d'un autre appareil de cuisson (1a - 1c, la'- 1c') à partir du navigateur web (4) interne de l'un des appareils de cuisson (1a - 1c, 1a'- 1c').
